Europäisches Patentamt

European Patent Office

Office européen des brevets

(19)

(11) **EP 0 737 860 B1**

(12) **EUROPEAN PATENT SPECIFICATION**

(45) Date of publication and mention
of the grant of the patent:
**03.07.2002 Bulletin 2002/27**

(51) Int Cl.[7]: **G01N 27/407**, G01N 27/406

(21) Application number: **96109059.4**

(22) Date of filing: **29.11.1989**

(54) **A method of determining a zero-humidity reference current level for an electrochemical cell humidity measurement device**

Verfahren zur Bestimmung der Referenzstromstärke bei Nullfeuchtigkeit für einen Feuchtigheitssensor unter Verwendung einer elektrochemischen Zelle

Méthode pour déterminer un niveau de courant de référence à humidité zéro pour un appareil de mesure de l'humidité utilisant une cellule électrochimique

(84) Designated Contracting States:
**DE GB**

(30) Priority: **29.11.1988 JP 30190888**
**29.11.1988 JP 30190988**
**29.11.1988 JP 15502488 U**

(43) Date of publication of application:
**16.10.1996 Bulletin 1996/42**

(62) Document number(s) of the earlier application(s) in
accordance with Art. 76 EPC:
**89312393.5 / 0 371 774**

(73) Proprietor: **NGK SPARK PLUG CO., LTD**
**Nagoya-shi (JP)**

(72) Inventors:
• **Yagi, Hideaki**
**Mizuho-ku, Nagoya-shi (JP)**
• **Horii, Katsuhiko**
**Mizuho-ku, Nagoya-shi (JP)**

(74) Representative: **Senior, Alan Murray**
**J.A. KEMP & CO.,**
**14 South Square,**
**Gray's Inn**
**London WC1R 5JJ (GB)**

(56) References cited:
**EP-A- 0 166 530          US-A- 4 851 103**

• **TRANSDUCERS '85. 1985 INTERNATIONAL CONFERENCE ON SOLID-STATE SENSORS AND ACTUATORS. DIGEST OF TECHNICAL PAPERS (CAT. NO.85CH2127-9), PHILADELPHIA, PA, USA, 11-14 JUNE 1985, 1985, NEW YORK, NY, USA, IEEE, USA, pages 336-339, XP002017050 SAJI K ET AL: "Characteristics of limiting current-type oxygen sensor"**
• **EXTENDED ABSTRACTS, vol. 87-2, 1987, page 2258 XP000034918 USUI T ET AL: "SOLID STATE HUMIDITY SENSOR USABLE AT HIGH TEMPERATURES"**
• **SENSORS AND ACTUATORS, vol. 16, no. 4, 1 April 1989, pages 345-358, XP000098746 USUI T ET AL: "GAS-POLAROGRAPHIC MULTIFUNCTIONAL SENSOR: OXYGEN-HUMIDITY SENSOR"**
• **PATENT ABSTRACTS OF JAPAN vol. 011, no. 383 (P-646), 15 December 1987 & JP-A-62 150152 (FUJIKURA LTD), 4 July 1987,**

## Description

This invention relates to a method of determining a zero-humidity reference current level for an electrochemical cell humidity measurement device.

Humidity measurement devices are known from JP-A-60-222761, 62-150151 and 62-150152.

In JP-A-60-222761, the partial pressure of the oxygen component in a gas is measured as a function of limit currents, values of which are obtained before and after removing the aqueous vapor component from the gas.

JP-A-62-150151 teaches that the limit currents due to gas diffusion that are obtained depend on the oxygen content and the aqueous content of the gas. The difference between values of the limit currents leads to the humidity measurement.

Further, JP-A-62-150152 suggests that a first limit current due to the oxygen content and a second limit current, due to the aqueous content are obtained. Then a third limit current based on the dehumidified gas is obtained. The humidity is measured based on the difference between the third limit current and at least one of the first and second limit currents.

In each of the devices of JP-A-60-222761, 62-150151 and 62-150152, a dryer device is required to desiccate the gas atmosphere so as to remove the aqueous vapour and simultaneously a measurement device is required to measure the limit current. This necessitates a large scale measurement system as a whole resulting in slow operation of the humidity measurement.

EP-A-0166530 discloses prior art sensors of similar construction to the sensors illustrated in Figs. 8 and 9 of the present application. Fig. 1 of EP-A-0166530 discloses an oxygen sensor comprising a diffusion housing, an oxygen ion conductive plate of solid electrolyte bonded to the diffusion housing and a pair of electrodes secured to opposite sides of the conductive plate. The electrodes are porous and are connected to a DC power source. The diffusion housing has a gas diffusion aperture of small diameter formed through it. The diffusion of oxygen from the monitored gas environment through the gas diffusion aperture into a chamber of the diffusion housing is effected by the application of a DC voltage across the two electrodes to pump oxygen present in the chamber through the oxygen ion conductive plate.

According to the present invention there is provided a method of determining a zero-humidity reference current level for an electrochemical cell humidity measurement device comprising an oxygen-ion permeable solid electrolyte, a pair of porous electrodes formed on surface portions of the solid electrolyte, and gas diffusion limiting means provided such that one of the electrodes is restricted in its exposure to an atmosphere, the method comprising the steps of:-

a) exposing the electrodes to a humid, oxygen containing gas;

b) applying a voltage across the electrodes to obtain for said gas a characteristic curve of applied voltage and resultant current flow between the electrodes; and

c) obtaining from said characteristic curve an inflection value (IM) of resultant current at a point of inflection (P) on said curve at which the second derivative of said curve falls to zero, said obtained inflection current value (IM) corresponding to a zero-humidity resultant current value for said gas, said zero-humidity resultant current value being usable subsequently as a reference current level to determine the humidity of said gas using the device.

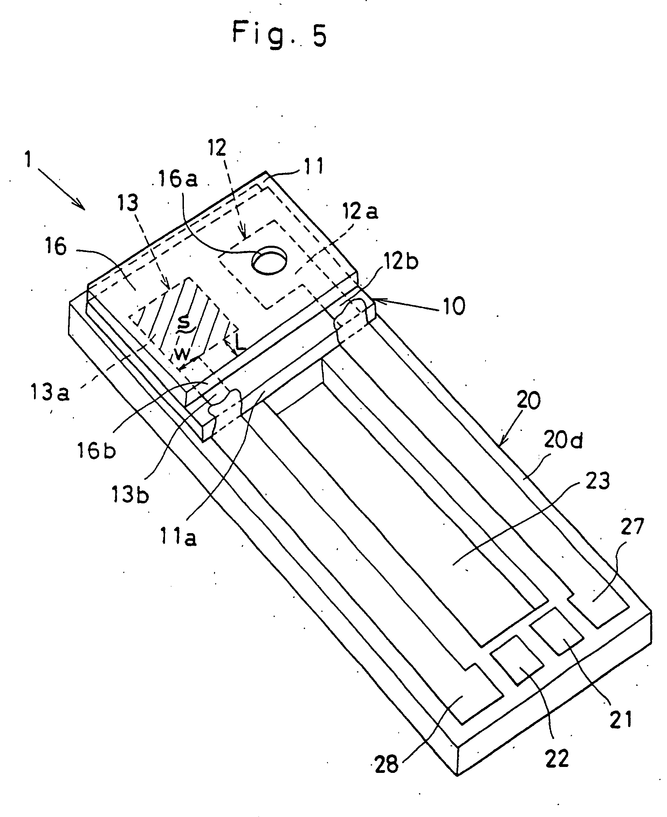

The characteristic curves are such that an increase in humidity lowers the first diffusion limit current (IL1) in the first portion (F1) of the curve in which the applied voltage is below the point of inflection voltage (VM). At the point of inflection the corresponding current (IM) remains constant for a given density of oxygen in the gas irrespective of how the humidity changes. When the voltage is above the point of inflection voltage (VM) an increase in humidity increases the second diffusion limit current (IL2) in the second flat portion (F2) as seen in Fig. 5.

In the manufacture of humidity measurement devices of the sort hereinafter described, a reference current level for each electrochemical cell is predetermined by the inflection current which is given by the point where the characteristic curves corresponding to at least two different humidity conditions of an oxygen-constant atmosphere intersect, since the inflection current does not vary regardless of the temperature as long as the gas to be measured maintains the same oxygen content. This inflection current indicates the reference current level corresponding to a zero humidity level of the gas at a constant oxygen content.

Although the inflection point is also expressed by the inflection voltage (VM), according to the invention upon humidity measurement the inflection current is previously memorized as the reference current level and compared with either of the diffusion limit currents (IL1), (IL2) which are obtained just by applying either of the first and second predetermined voltages, corresponding to the flat portions (F1) and (F2).

Should the density of oxygen in the aqueous atmosphere change, the humidity can be quickly and easily determined, by alternately changing the voltage applied across the electrodes from the voltage at the point of inflection (P) to assure or rather adjust the inflection current for the zero-humidity reference level to the voltage of either of the flat portions (F1) and (F2) to measure the diffusion limit current (IL1) or (IL2) for the comparison and comparing the adjusted inflection current with the measured diffusion limit current to compute the humidity of the gas in a comparatively short time.

The invention will be further described by way of example with reference to the accompanying drawings in which:-

Fig. 1 is a schematic view of a first embodiment of humidity measurement device suitable for use in the method of the present invention;
Fig. 2 is a perspective view of the electrochemical cell of the humidity measurement device of Fig. 1;
Fig. 3 is a cross-sectional view of the electrochemical cell;
Fig. 4 is a perspective view of the ceramic heater of the Fig. 2 cell;
Fig. 5 is a perspective view of a modified type of the electrochemical cell of Fig. 2;
Fig. 6 is a graph of characteristic curves showing the relationship between voltage and current for the illustrated embodiments of humidity measurement device;
Fig. 7 is a view of characteristic curves showing the relationship between current and humidity for the illustrated embodiments of humidity measurement device;
Fig. 8 is a schematic view of an oxygen gas measurement device to which the present invention is applicable;
Fig. 9 is a schematic view of another oxygen gas measurement device to which the present invention is applicable; and
Figs. 10 through 12 are perspective views of modified forms of apparatus suitable for use in the method of the present invention.

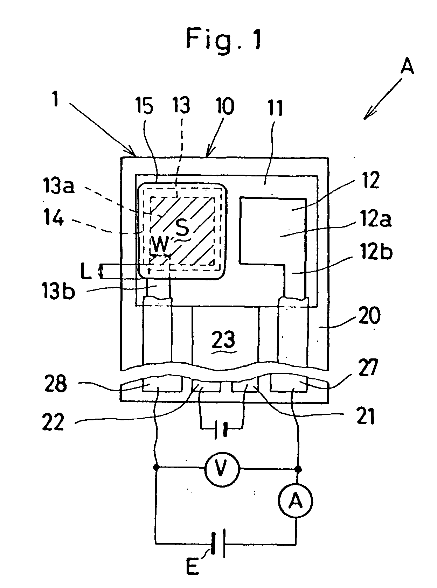

Figs. 1 to 4 show an embodiment of solid electrolyte electrochemical cell 1 suitable for use in the method of the present invention. The electrochemical cell 1 has a sensor element 10 and a ceramic heater 20. The sensor element 10 comprises an oxygen-ion conductive plate 11, an anode electrode 12, a cathode electrode 13, a porous alumina layer 14 and a glaze layer 15.

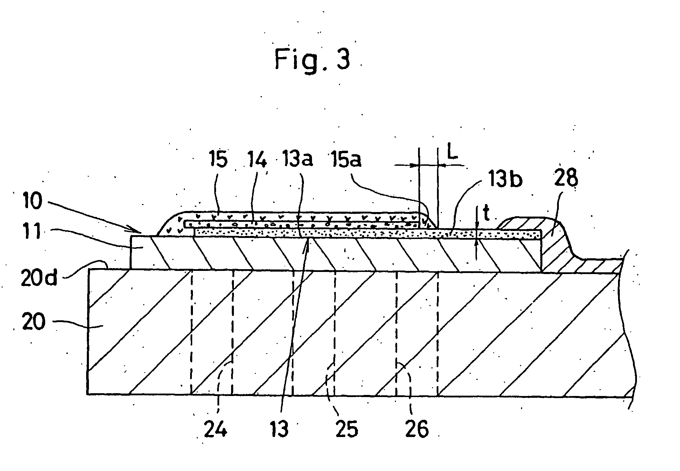

The oxygen-ion permeable plate 11 is made of a solid state solution of zirconia partially stabilized with yttrium oxides to serve as a solid electrolyte. The oxygen-ion conductive plate 11, in one of the embodiments, is in the shape of rectangle, and measures 5 mm x 7 mm, and has a thickness of 0.3 mm. On a top surface of the oxygen-ion-permeable plate 11, the anode 12 and cathode electrode 13 are located at predetermined parallel intervals. Each of the electrodes has electrode portions 12a, 13a and connection portions 12b, 13b. The electrodes 12, 13 are made of porous platinum sintered onto the oxygen-ion conductive plate 11 at a temperature of 1500 degrees centigrade after they have been printed on the plate 11. On the oxygen-ion conductive plate 11, the porous alumina layer 14 which contains some glass (not shown) is coated in a manner to cover the electrode portion 13a and partly cover the connection portion 13b. The porous alumina layer 14 covers the electrode portion 13a and some area of the connection portion 13b and the glaze layer 15 covers the alumina porous layer 14 to prevent the electrode portion 13a from being exposed to the gas to be measured except at the connection portion 13b. The porous alumina layer 14 and the glaze layer 15 thus coated on the oxygen-ion conductive plate 11 are made by firing at the temperature of 850-900 degrees centigrade. The electrode portion 13a is isolated from the gas to be measured, but the connection portion 13b is exposed by the glaze layer 15 as seen in Fig. 3.

The exposed connection portion 13b serves as a gas diffusion limiting aperture which works to limit the amount of oxygen diffusion and aqueous vapor diffusion from the gas into the electrode portion 13a when voltage is applied across the electrodes 12, 13, because the connection portion 13b is porous. Each of the electrodes 12, 13 has a thickness (t) of 20 microns, and the electrode portions 12a, 13a are in the shape of a square of side 2.5 mm.

The connection portion 13b has a width (W) of 1 mm, and a length (L) of 2 mm covered partly by the glaze layer 15.

The amount of gas diffusion toward the electrode portion 13a through the connection portion 13b is in proportion to the cross sectional area (s; not shown), but in inverse proportion to the length (L) of the connection portion 13b, where the cross sectional area (s) is given by the product of the width (W) and thickness (t; not shown) of the connection portion 13b which acts as a gas diffusion limiting aperture in this embodiment.

A practical ratio (R) by which the diffusion limit currents can be controlled is determined by the cross. sectional area (s) of the connection portion 13b, the surface area (S) of the electrode portion 13a and the length (L) as follows:

$$R = s/LS$$

In one embodiment the result $R = 1.6 \times 10^{-3}$ is obtained since the relationship among (s), (L) and (S) are s= 0.02, L= 2, S= 6.25 in turn.

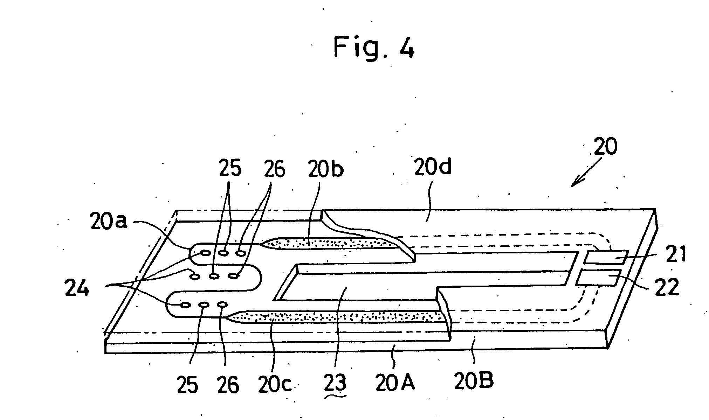

The sensor element 10 is bonded on the ceramic heater 20 with vitreous adhesives (not shown) and baked together at the temperature of circa 800 degrees centigrade. The ceramic heater 20 is a substrate heater, as shown in Fig. 4, manufactured by firing a green sheet 20A made of 96% alumina on which an appropriate heater pattern 20a is produced by printing with tungsten (wolfram) paste, together with a green sheet cover 20B identical to the green sheet 20A.

The ends of the heater pattern 20a are connected to respective heater-electrodes 21, 22, on an outside surface 20d by way of conductive patterns 20b, 20c sintered inside the ceramic heater 20.

Since the gas diffusion limiting is effected at the connection portion 13b of the cathode electrode 13, the heater pattern 20a is adapted locally to heat the electrode portions 12a, 13a which pump oxygen in and out, thus preventing oxygen pumping due to the connection portion 13b which remains at a comparatively low temperature.

In the meantime, the ceramic heater 20 has a central opening 23 to enhance the efficiency of the heating of sensor element 10, and a plurality of rows of perforations 24, 25 and 26 are made in the area where the sensor element 10 is placed. On the surface 20d of the ceramic heater 20, there are provided sensor electrodes 27, 28 which are in turn connected to the connection portions 12b, 13b by means of a printed pattern of ruthenium for the energization of electrodes 12, 13. The sensor electrodes 27, 28 are printed and sintered simultaneously on the ceramic heater 20 and the sensor element 10 after the sensor element 10 is bonded onto the surface 20d.

The electrochemical.cell 1, thus constructed, is adapted to serve as a sensing portion of the humidity measurement device (A) to measure voltage and current when a voltage is applied across the sensor electrodes 27, 28 by means of a power source (E). In this instance, the ceramic heater 20 is energized to heat around the electrode portions 12a, 13a to keep them at the temperature of 300 - 700 degrees centigrade.

With the structure thus described, the electrochemical cell 1 is placed in the gas whose humidity is to be measured. The voltage applied across the electrodes 12, 13 causes oxygen in the electrode portion 13a covered by the glaze layer 15 to ionise and as a result the oxygen component in the gas which comes through the gas diffusion aperture of the porous connecting portion 13b is pumped from the cathode electrode 13 to the anode electrode through the sensor element 10 of oxygen-ion-permeable conductive solid electrolte in accordance with the voltage applied across the electrodes 12, 13. At this time, only the electrode portion 13a is locally heated so that the oxygen component diffuses into the electrode portion 13a through the connection portion 13b which is not heated. The amount of oxygen diffusing into the electrode portion 13a is limited by the gas diffusion limiting aperture of the connection portion 13b in accordance with the oxygen content of the gas to be measured.

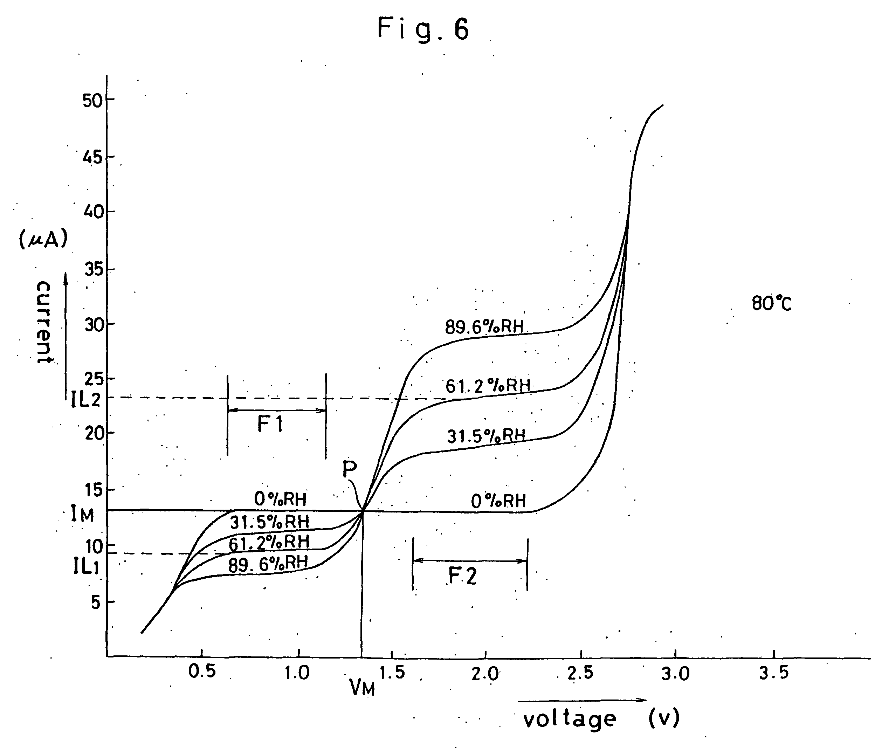

The limited rate of gas diffusion causes the current restriction to be represented as the first diffusion limit current (IL1) or the second diffusion limit current (IL2) as seen in the range of the first flat portion (F1) or the second flat portion (F2) in Fig. 6 in which the temperature of the gas to be measured stands at 80 degrees centigrade. In Fig. 6, characteristic relationships are depicted between the voltage and the current flow across the electrodes under various humidity levels. The curve is continuous from the first flat portion (F1) in which the first diffusion current (IL1) remains substantially constant within the first predetermined voltage range, and passes through a point of inflection (P) at which its second differential derivative falls to zero, and ends up in the second flat portion (F2) in which the second diffusion limit current (IL2) remains substantially constant within the second predetermined voltage range.

The first diffusion limit current (IL1) which is lower than the infection current (IM) decreases with increasing humidity of the gas simply because the partial pressure of the oxygen component decreases as the aqueous density of the gas to be measured increases. When the applied voltage increases until it is higher than the inflection voltage (VM), the second diffusion limit current (IL2) increases with the increase of the aqueous density of the gas because the aqueous component of $H_2O$ in the gas is dissolved to produce additional oxygen ions which are pumped together to the anode electrode 12 from the cathode electrode 13. Although the aqueous component which diffuses into the electrode portion 13a through the connection portion 13b is controlled or rather limited to thereby make the current level (IL2) flat or constant in the predetermined voltage range, the aqueous density of the gas increases the level of the second diffusion limit current.

Since the oxygen diffusion and aqueous diffusion rates are limited at the connection portion 13b of the cathode electrode 13, the limit current (IL2) increases in proportion to the humidity while the current (IL1) increases in inverse proportion to the humidity under a constant density of oxygen component in the gas to be measured. However the point of inflection is not affected by the humidity of the gas so that the humidity measurement device utilizes this point of inflection as the reference level of humidity for the device.

When the applied voltage is changed from that of the range F1 to range F2, the inflection current level (IM) at the point of inflection at which the current switches from the limit current (IL1) to the limit current (IL2) does not change or move if the density of the oxygen gas is kept constant regardless of whether the aqueous density changes in the gas in which the electrochemical cell is exposed.

The current level (IM) remains constant for a constant oxygen content, and it is noted that the value of the inflection current (IM) equally corresponds to the current when the humidity is zero (0 % in relative humidity), that is the gas is completely desiccated.

The humidity measurement for the gas according to the invention is done as follows. By applying a voltage around the inflection voltage (VM) corresponding to the point of inflection (P) across the sensor electrodes 27, 28, the inflection current (IM) is measured. Then a voltage corresponding to either of the first flat portion (F1) and the second flat portion (F2), which are separated by the inflection voltage (VM), is applied across the sensor electrodes 27, 28 to measure the diffusion limit current level (IL1 or IL2). Either of the current levels is compared with the inflection current to determine the relative humidity.

In this instance it is only necessary to measure the diffusion limit current level at either one of the first flat portion (F1) or the second flat portion (F2) for the comparison if the oxygen density in the gas to be measured is constant, once the inflection current (IM) at the inflection point (P) is determined for the zero humidity reference level, thus leading to good response of measurement with easy operation.

It is only necessary to measure the inflection current level (IM) at the point of inflection (P), and thereafter to measure the current level at the flat portion, in the case in which there is a possibility that the density of oxygen in the gas to be measured has changed.

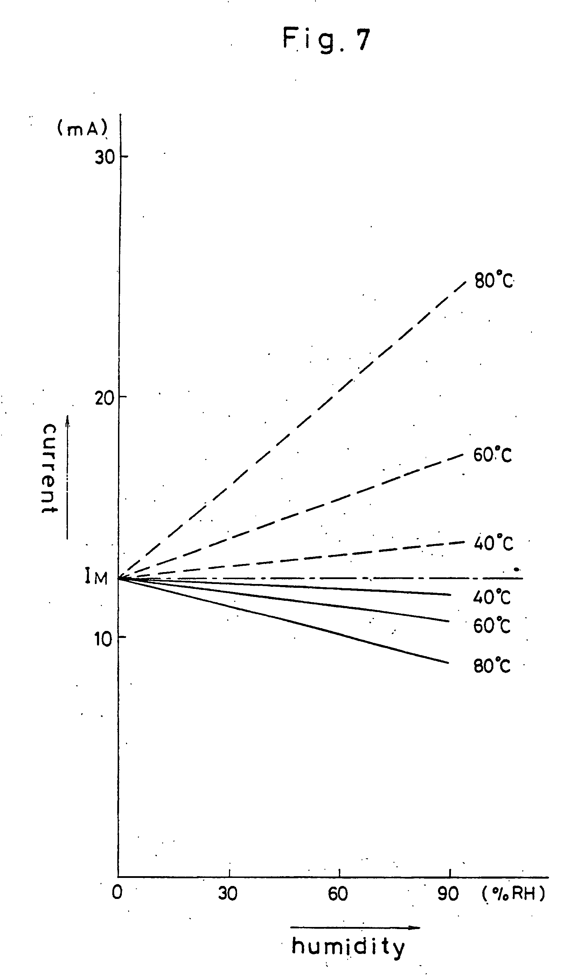

Fig. 7 shows characteristic curves of relative humidity against the current levels (IL1), (IL2) at the first and second flat portions (F1), (F2) at a constant density of oxygen component in the gas. In Fig. 7, the limit current levels (IL1) at the first flat portion (F1) are shown in solid lines, while the limit current levels (IL2) at the second flat portion (F2) are shown in broken lines, for gas component temperatures of 40, 60 and 80 degrees centigrade. The dot-dash line in Fig. 7 shows a current level (IM) at the point of inflection (P). It will be understood from Fig. 7 that the inflection current (IM) can be used as the reference current of zero humidity at any temperature of the gas to be measured.

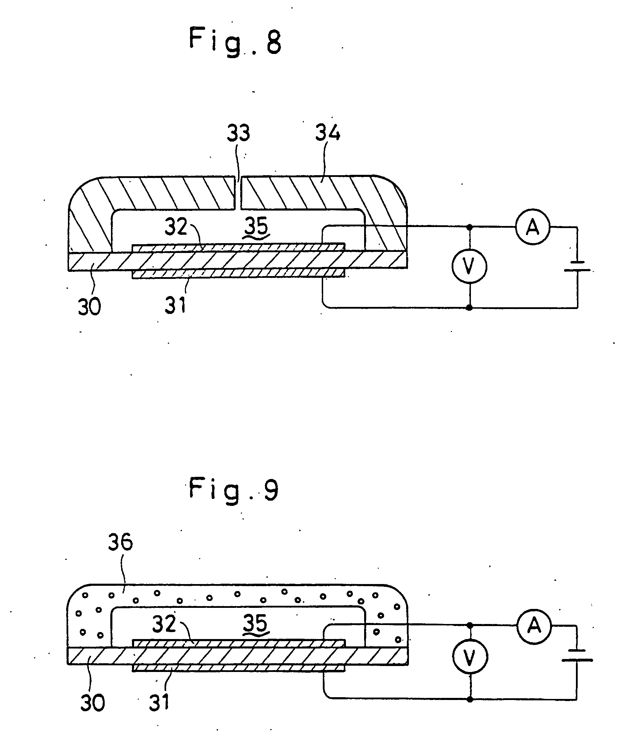

It should be noted that electrodes 31, 32 may be placed in a manner to sandwich an oxygen-ion conductive plate 30 as seen in Fig. 8, in which the cathode electrode 32 is covered by a coverlet 34 having a small perforation 33 which works to limit vapor diffusion and oxygen gas diffusion towards a hollow space 35. The cathode electrode 32 may be covered.by a porous coverlet 36, to limit the vapor diffusion and the oxygen gas diffusion towards the hollow space 35, as seen in Fig. 9.

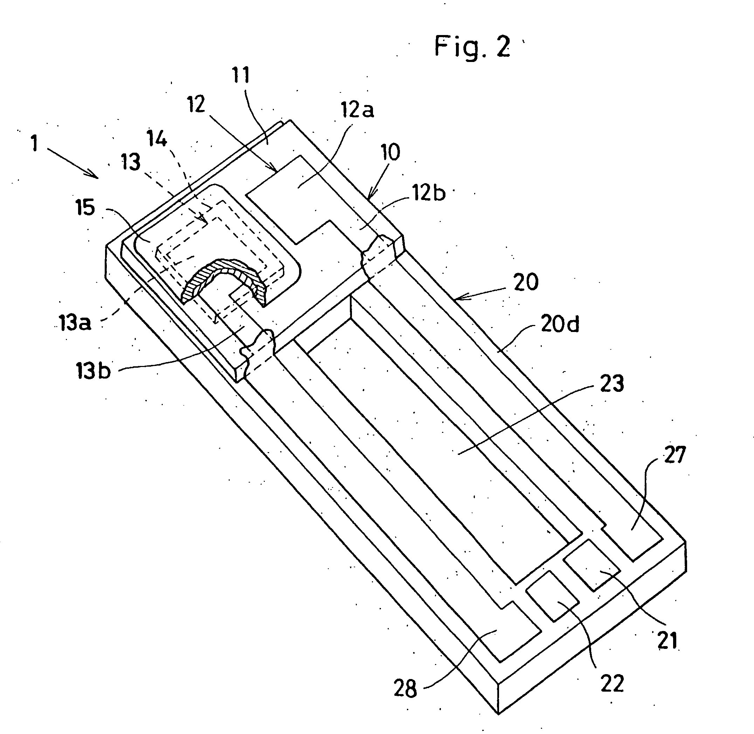

Fig. 5 shows a modification with, instead of the alumina porous layer and the glaze layer 15 of Fig. 2, a cover plate 16 provided in air-tight relationship with the oxygen-ion permeable plate 11. The cover plate 16 is in the form of a rectangle having the same width as that of the oxygen-ion conductive plate 11 and terminating lengthwisely somewhat short of one end 11a of the oxygen-ion permeable plate 11.

In this instance, the connection portion 13b, which is sandwiched between the oxygen-ion conductive plate 11 and one end 16b of the cover plate 6, works as an oxygen gas diffusion limiting means. The plate 16 is preferably made of a solid electrolyte of zirconium partially stabilized with yttrium oxides, which has a good wetting relationship with the oxygen-ion conductive plate 11 and the electrodes 12, 13 so as to facilitate bonding during the baking process.

The plate 16 further has a hole 16a which simply communicates between the anode electrode portion 12a and the gas (e.g. atmosphere) to be measured.

It is noted that in this embodiment the reference numerals corresponding to the elements in Fig. 2 are identical to those of Fig. 5.

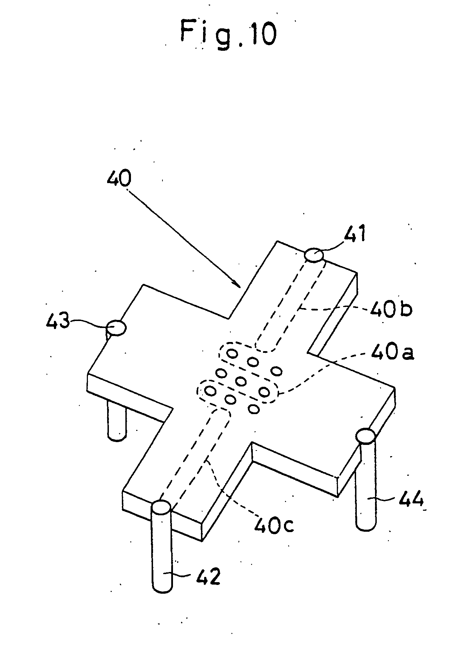

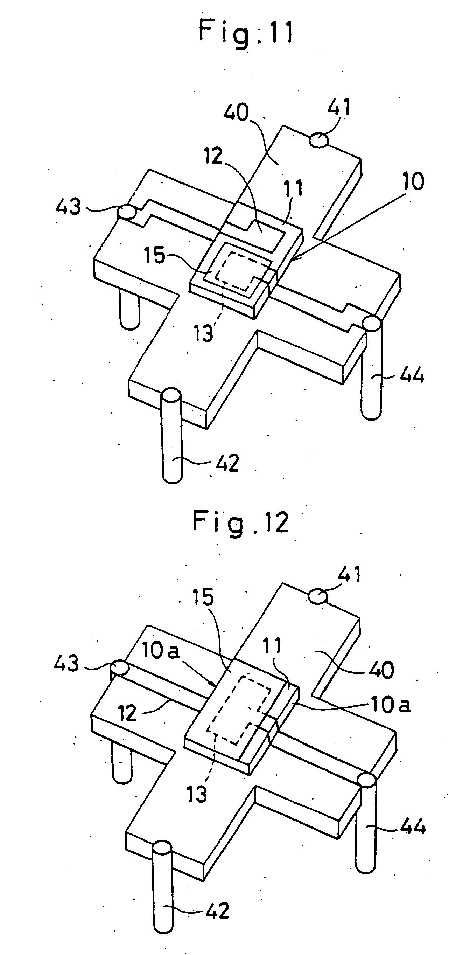

Other embodiments of apparatus are described with reference to Figs. 10 through 12. A ceramic heater 40 has a perforated base made in the form of cruciform configuration. Two terminals of the ceramic heater 40 have conductive patterns 40b, 40c connected to a heater pattern 40a in the center, having nickel pins 41, 42 secured by silver brazing to the ends of the terminals. The other two terminals have pins 43, 44 for electrical connection to the anode and cathode electrodes 12, 13 of the sensor element.

In Fig. 11, both the anode and cathode electrodes 12, 13 are disposed to opposite sides of the oxygen-ion conductive plate 11 to form the sensor element 10.

In Fig. 12, the anode and cathode electrodes 12, 13 are placed in a manner to sandwich the oxygen-ion conductive plate 11 to form an electrochemical cell 10a.

In the above modified forms of apparatus the sensor element 10 is directly placed on the ceramic heater 40, thus contributing to ease of manufacturing, improved mechanical strength, and good local heating with favourable thermal conductivity for the humidity measurement device.

Although various minor structural modifications might be suggested by those skilled in the art, it should be understood that we wish to embody within the scope of the invention as defined in the appended claims all such modifications as reasonably and properly come within the scope of our contribution to the art.

## Claims

1. A method of determining a zero-humidity reference current level for an electrochemical cell humidity measurement device comprising an oxygen-ion permeable solid electrolyte (11, 30), a pair of porous electrodes (12, 13, 31, 32) formed on surface portions of the solid electrolyte, and gas diffusion limiting means (15, 33, 36) provided such that one of the electrodes is restricted in its exposure to an atmosphere, the method comprising the steps of:-

   a) exposing the electrodes (13, 32) to a humid, oxygen-containing gas;
   b) applying a voltage across the electrodes (12, 13, 31, 32) to obtain for said gas a characteristic curve of applied voltage and resultant current flow between the electrodes; and
   c) obtaining from said characteristic curve an inflection value (IM) of resultant current at a point of inflection (P) on said curve at which the second derivative of said curve falls to zero, said obtained inflection current value (IM) corresponding to a zero-humidity resultant current value for said gas, said zero-humidity resultant current value being usable subsequently as a reference current level to determine the humidity of said gas using the device.

**2.** A method as claimed in claim 1, wherein Steps b) and c) are repeated to obtain a new inflection current value (IM) in case the oxygen content of said gas changes.

**3.** A method of humidity measurement comprising determining a reference current level as claimed in either claim 1 or claim 2 and determining the humidity of said gas.

**4.** A method as claimed in claim 3, wherein said zero-humidity resultant current value is compared with another resultant current value obtained from said characteristic curve at a different applied voltage.

**Patentansprüche**

**1.** Verfahren zur Bestimmung des Referenz-Stromniveaus bezüglich der Nullwert-Feuchtigkeit für eine Feuchtigkeitsmessvorrichtung mit elektrochemischer Zelle, umfassend einen für Sauerstoffionen durchlässigen festen Elektrolyten (11, 30), ein Paar von porösen Elektroden (12, 13, 31, 32), gebildet auf Oberflächenbereichen des festen Elektrolyts, und Gasdiffusions-Begrenzungseinrichtungen (15, 33, 36), die so vorgesehen sind, dass eine der Elektroden hinsichtlich ihrer Exponierung an eine Atmosphäre beschränkt ist, wobei das Verfahren die folgenden Schritte umfasst:

a) Exponieren der Elektroden (13, 32) an ein feuchtes, sauerstoffhaltiges Gas;

b) Anlegen einer Spannung über die Elektroden (12, 13, 31, 32), um für das Gas eine charakteristische Kurve der angelegten Spannung und des resultierenden Stromflusses zwischen den Elektroden zu erhalten; und

c) Erhalten aus der charakteristischen Kurve eines Wendepunktwertes (IM) des resultierenden Stroms an einem Wendepunkt (P) auf der Kurve, an welchem die zweite Ableitung der Kurve auf null abfällt, wobei der erhaltene Wendepunktsstromwert (IM) einem aus der Nullwert-Feuchtigkeit resultierenden Stromwert für das Gas entspricht, wobei der aus der Nullwert-Feuchtigkeit resultierende Stromwert anschließend als Referenz-Stromniveau zur Bestimmung der Feuchtigkeit des Gases unter Einsatz der Vorrichtung verwendet werden kann.

**2.** Verfahren nach Anspruch 1, wobei die Schritte b) und c) wiederholt werden, um einen neuen Wendepunksstromwert (IM) für den Fall zu erhalten, bei dem der Sauerstoffgehalt des Gases sich verändert.

**3.** Verfahren zur Feuchtigkeitsmessung, umfassend die Bestimmung eines Referenz-Stromniveaus nach Anspruch 1 oder Anspruch 2 und die Bestimmung der Feuchtigkeit des Gases.

**4.** Verfahren nach Anspruch 3, wobei der aus der Nullwert-Feuchtigkeit resultierende Stromwert mit einem anderen resultierenden Stromwert verglichen wird, der aus der charakteristischen Kurve bei einer unterschiedlichen angelegten Spannung erhalten wird.

**Revendications**

**1.** Procédé pour déterminer un niveau de courant de référence à humidité zéro pour un dispositif de mesure d'humidité à cellule électrochimique, comprenant un électrolyte solide (11, 30) perméable aux ions oxygène, une paire d'électrodes poreuses (12, 13, 31, 32) formées sur des surfaces de l'électrolyte solide, et un moyen de limitation de diffusion gazeuse (15, 33, 36) conçu pour que l'exposition de l'une des électrodes à une atmosphère soit limitée, le procédé comprenant les étapes consistant à :

a) exposer les électrodes (13,32) à un gaz humide contenant de l'oxygène ;
b) appliquer une tension aux électrodes (12, 13, 31, 32) afin d'obtenir pour ledit gaz une courbe caractéristique de tension appliquée et de circulation résultante de courant entre les électrodes ; et
c) obtenir à partir de ladite courbe caractéristique une valeur d'inflexion (IM) de courant résultant en un point d'inflexion (P) sur ladite courbe où la dérivée seconde de ladite courbe tombe à zéro, ladite valeur d'inflexion (IM) de courant obtenue correspondant à une valeur de courant résultant à humidité zéro pour ledit gaz, ladite valeur de courant résultant à humidité zéro étant utilisable ensuite comme niveau de courant de référence pour déterminer l'humidité dudit gaz à l'aide du dispositif.

**2.** Procédé selon la revendication 1, dans lequel les étapes b) et c) sont répétées pour obtenir une nouvelle valeur d'inflexion (IM) de courant en cas de changements de la teneur en oxygène dudit gaz.

**3.** Procédé de mesure d'humidité, comprenant les étapes consistant à déterminer un niveau de courant de référence selon la revendication 1 ou la revendication 2 et à déterminer l'humidité dudit gaz.

**4.** Procédé selon la revendication 3, dans lequel ladite valeur résultante de courant à humidité zéro est comparée à une autre valeur de courant résultant obtenue à partir de ladite courbe caractéristique à une tension appliquée différente.

Fig. 1

Fig. 2

# Fig. 3

EP 0 737 860 B1

Fig. 4

# Fig. 5

Fig. 6

# Fig. 7

# Fig.8

33 34

32 35

30 31

# Fig.9

36

32 35

30 31

# Fig.10

# Fig.11

# Fig.12